# EUROPÄISCHE PATENTSCHRIFT

(11) **EP 3 044 536 B1**
(45) Veröffentlichungstag und Bekanntmachung des Hinweises auf die Patenterteilung: **22.11.2017**
(21) Anmeldenummer: 13762122.3
(22) Anmeldetag: 13.09.2013
(51) Int. Cl.: G01B 11/24

(54) **VERFAHREN UND VORRICHTUNG ZUR VERMESSUNG VON INNENGEWINDEN EINES WERKSTÜCKS MIT EINEM OPTISCHEN SENSOR**
METHOD AND APPARATUS FOR MEASURING INTERNAL THREADS OF A WORKPIECE USING AN OPTICAL SENSOR
PROCÉDÉ ET DISPOSITIF DE MESURE DE TARAUDAGES D'UNE PIÈCE USINÉE AU MOYEN D'UN CAPTEUR OPTIQUE

(43) Veröffentlichungstag der Anmeldung: 20.07.2016
(73) Patentinhaber: Carl Zeiss Industrielle Messtechnik GmbH, 73447 Oberkochen (DE)
(72) Erfinder: HÖLLER, Frank, 73434 Aalen (DE); SPRUCK, Bernd, 73563 Mögglingen (DE)
(74) Vertreter: Carl Zeiss AG - Patentabteilung
(86) Internationale Anmeldenummer: PCT/EP2013/068969
(87) Internationale Veröffentlichungsnummer: WO 2015/036026

(56) Entgegenhaltungen:
- US-A1- 2012 314 223
- HONGWEI ZHANG, REUVEN KATZ, JOHN S. AGAPIOU: "In-process inspection of internal threads of machined automotive parts", SPIE, PO BOX 10 BELLINGHAM WA 98227-0010 USA, Bd. 7432, 10. September 2009 (2009-09-10), Seiten 74320D-1-74320D-9, XP040500948, DOI: 10.1117/12.824387
- DER-BAAU PERNG ET AL: "A novel internal thread defect auto-inspection system", THE INTERNATIONAL JOURNAL OF ADVANCED MANUFACTURING TECHNOLOGY, SPRINGER, BERLIN, DE, Bd. 47, Nr. 5-8, 30. Juli 2009 (2009-07-30), Seiten 731-743, XP019797819, ISSN: 1433-3015

## Beschreibung

Die Erfindung betrifft ein Verfahren und eine Vorrichtung zur Vermessung von Innengewinden eines Werkstücks mittels eines Koordinatenmessgeräts mit einem optischen CCD- oder CMOS-Sensor.

Neben Bohrungen sind Innengewinde zentrale Prüfmerkmale von Werkstücken insbesondere im Antriebsstrang von Kraftfahrzeugen. Typischerweise werden Innengewinde oft an sicherheits- und funktionsrelevanten Stellen im Antriebsstrang verwendet, beispielsweise im Bereich der Radbefestigungen, Zylinderköpfe usw..

Während Schrauben mit z.B. dem Schattenbildverfahren auf ihre Gewindemaße geprüft werden, sind Innengewinde nicht nur durch die Gewindemaße, sondern auch durch die Position und die Orientierung des Innengewindes relativ zum Werkstück gekennzeichnet.

Die Überprüfung von Gewindemaßen von Innengewinden wird bisher durch gelegentliche Kontrollen mittels von Gewindelehren, kapazitiven Sensoren oder interferenzmikroskopischen Verfahren durchgeführt (siehe z.B. den Artikel von Hongwei Zhang et al. "In-process inspection of internal threads of machined automotive parts", SPIE (2009), 7432:1-4 oder den Artikel von Der-Baau Perng et al. "A novel internal thread defect auto-inspection system", Int J Adv Manuf Technol (2010), 47:731-743). Hierbei wird aber die Position und/oder die Orientierung des Innengewindes relativ zum Werkstück nicht gemessen und daher nicht überprüft.

Aufgabe der vorliegenden Erfindung ist es daher, ein Verfahren bzw. eine Vorrichtung anzugeben, mit Hilfe dessen bzw. derer die gleichzeitige Erfassung der Gewindemaße, der Position und/oder der Orientierung von Innengewinden möglich ist.

Diese Aufgabe wird gelöst durch ein Verfahren zum Vermessen eines Innengewindes eines Werkstücks mittels eines Koordinatenmessgeräts mit Hilfe eines CCD- oder CMOS-Sensors, wobei von einem Abschnitt des Innengewindes mindestens zwei Bilder mit dem CCD- oder CMOS-Sensor aufgenommen werden, wobei zur Aufnahme des Abschnitts des Innengewindes dieser mittels einer Beleuchtung beleuchtet wird und wobei die Aufnahmebedingungen für die mindestens zwei Bilder verändert werden und wobei die Daten dieser mindestens zwei aufgenommenen Bilder zumindest teilweise dazu verwendet werden, die Position, die Orientierung, den Kerndurchmesser und/oder die Steigung des Innengewindes zu ermitteln.

Durch die Aufnahme von mindestens zwei Bildern eines Abschnitts des Innengewindes mit unterschiedlichen Aufnahmebedingungen ist es möglich, aus der zweidimensionalen Information innerhalb eines Bildes hinsichtlich der Kantenlage der Gewindekanten des Innengewindes durch die unterschiedlichen Aufnahmebedingungen bei den mindestens zwei unterschiedlichen Bildern auf die vier Messgrößen Position, Orientierung, Kerndurchmesser und/oder Steigung des Innengewindes zu schließen. Die Gewindekanten sind je nach Beleuchtung entweder als helle Linien (Glanzeffekt) oder als Hell/Dunkelgrenze (Schatteneffekt) in den Bildern sichtbar und somit mittels herkömmlicher Bildverarbeitungssoftware hinsichtlich ihrer relativen Lage und ihrem Verlauf in den Bildern auswertbar. Als Position eines Innengewindes wird hierbei die ermittelte Lage des Zentrums des Kerndurchmessers am Beginn des Innengewindes in den drei Raumkoordinaten x, y und z relativ zu dem Koordinatenursprung des Koordinatensystems des Werkstücks verstanden. Als Orientierung eines Innengewindes wird hingegen die ermittelte Neigung der Achse des Innengewindes, die durch die gemittelte Lage der Zentren der ermittelten lokalen Kerndurchmesser entlang des Innengewindes gebildet wird, gegenüber den drei Raumkoordinaten x, y und z des Koordinatensystems des Werkstücks verstanden. Der Kerndurchmesser bzw. die Steigung sind hierbei gemäß DIN 13 definiert und durch den arithmetischen oder Gauß'schen Mittelwert der entlang des Innengewindes ermittelten lokalen Kerndurchmesser bzw. Steigungen gegeben.

In einer Ausführungsform werden aus den Daten der mindestens zwei aufgenommenen Bilder die Position und die Orientierung und der Kerndurchmesser und die Steigung des Innengewindes ermittelt. Durch die gleichzeitige Auswertung aller der genannten vier Messgrößen lassen sich sowohl die Toleranzeinhaltung bei den Gewindemaßen, als auch die Toleranzeinhaltung bei den Lagemaßen des Innengewindes innerhalb des CAD-Modells des Werkstücks überprüften.

In einer anderen Ausführungsform erfolgt die Aufnahme eines der Bilder unter zentralperspektivischer Abbildung und die Aufnahme mindestens eines weiteren Bildes unter telezentrischer Abbildung. Bei einer telezentrischen Abbildung ist der Abstand der Gewindekanten in dem Bild unter Berücksichtigung des Abbildungsmaßstabs der abbildenden Optik identisch mit der Steigung des Gewindes und unabhängig vom Kerndurchmesser des betrachteten Innengewindes. Hingegen ist bei einer zentralperspektivischen Abbildung der Abstand der Gewindekanten in dem Bild sowohl von der Steigung als auch vom Kerndurchmesser des Innengewindes abhängig, so dass bei einem Vergleich von telezentrischer Abbildung und zentralperspektivischer Abbildung der lokale Kerndurchmesser und die lokale Steigung des Innengewindes an der betrachteten Stelle ermittelt werden kann.

In einer weiteren Ausführungsform wird die laterale Position und/oder die Orientierung der für die Abbildung auf den CCD- oder CMOS-Sensor verantwortlichen optischen Baugruppen für die Aufnahme eines der Bilder gegenüber der lateralen Position und/oder Orientierung des Sensors für die Aufnahme mindestens eines weiteren Bildes verändert. Bei einer nicht-telezentrischen Abbildung sind die Abstände der Gewindekanten, wie bereits erwähnt, sowohl von der Steigung als auch vom Abstand der verantwortlichen optischen Baugruppen zu dem betrachteten Abschnitt des Innengewindes abhängig. Daher kann bei der Auswertung der Bilder aus zwei unterschiedlichen lateralen Positionen heraus zusätzlich zur Steigung die laterale Position des Innengewindes gegenüber der verantwortlichen optischen Baugruppe und damit bei gegebener Kalibrierung gegenüber dem Koordinatensystem des Werkstücks ermittelt werden. Entsprechend sind bei einer nicht-telezentrischen Abbildung die Abstände der Gewindekanten aufgrund einer Neigung der optischen Achse der für die Abbildung verantwortlichen Baugruppen verändert, so dass die Orientierung des Innengewindes gegenüber dem Koordinatensystem des Werkstücks ermittelt werden kann.

Es versteht sich, dass die genannten Maßnahmen: Wechsel von zentralperspektivischer Abbildung zu telezentrischer Abbildung, Wechsel der lateralen Position und Wechsel der Orientierung für die Aufnahmen der mindestens zwei Bilder beliebig austauschbar und/oder kombinierbar sind, um die oben genannten Messgrößen eines Innengewindes zu ermitteln.

In einer Ausführungsform wird zur Aufnahme des Abschnitts des Innengewindes dieser mittels einer Beleuchtung beleuchtet und die Aufnahme eines der Bilder erfolgt unter einem ersten Beleuchtungswinkel, der von einem weiteren Beleuchtungswinkel bei der Aufnahme eines weiteren Bildes abweicht. Hierdurch ist es möglich, für verschiedene Abschnitte des Innengewindes verschiedene Schatteneffekte der Gewindekanten in den Bildern zu erzeugen. Unter einer Beleuchtung wird im Rahmen dieser Anmeldung jede Art von Vorrichtung verstanden, die in der Lage ist, auch nur teilweise die Oberfläche des Innengewindes zu beleuchten. Somit sind sowohl einfache Lichtquellen wie Leuchtdioden oder LED-Chips, als auch komplizierte Beleuchtungssysteme mit z.B. Mikrospiegelanordnungen hierdurch umfasst. Unter dem Beleuchtungswinkel einer Beleuchtung wird im Rahmen dieser Anmeldung der mittlere Beleuchtungswinkel des Beleuchtungslichts auf einen gedachten Innenzylinder des Innengewindes in dem zu betrachtenden Abschnitt entlang einer Schnittebene umfassend die Achse des Innengewindes verstanden. Wobei der gedachte Innenzylinder durch die Gewindekanten des Innengewindes gebildet wird und somit der Kerndurchmesser des Innengewindes den Durchmesser des gedachten Innenzylinders darstellt.

In einer weiteren Ausführungsform wird aus den Daten der mindestens zwei aufgenommenen Bilder zusätzlich der Flankendurchmesser des Innengewindes ermittelt. Durch die Erzeugung unterschiedlicher Schatteneffekte ist es möglich, abschnittsweise den Gewindeverlauf zwischen den Gewindekanten zu erfassen, wodurch sich mit den oben genannten Maßnahme auch der Flankendurchmesser des Innengewindes nach DIN 13 erfassen lässt.

Die Aufgabe der vorliegenden Erfindung wird darüber hinaus gelöst durch eine Vorrichtung zum Vermessen eines Innengewindes eines Werkstücks mittels eines Koordinatenmessgeräts mit Hilfe eines CCD- oder CMOS-Sensors gemäß einem der oben genannten Verfahren umfassend ein Objektiv, eine Beleuchtung und ein optisches Umlenkelement, wobei das optische Umlenkelement so gestaltet ist, dass es in das Innengewinde eingeführt und an diesem entlanggeführt werden kann, wobei das Objektiv im Zusammenspiel mit dem optischen Umlenkelement für eine Abbildung eines Abschnitts des Innengewindes auf den CCD- oder CMOS-Sensor sorgt und wobei das Objektiv für die Aufnahme von mindestens zwei Bildern des Abschnitts des Innengewindes mittels des CCD- oder CMOS-Sensors die Perspektive ändern kann. Durch den Wechsel der Perspektive für die Aufnahme von mindestens zwei Bildern ist es möglich, die Position, die Orientierung, den Kerndurchmesser und/oder die Steigung des Innengewindes zu ermitteln. Als Objektiv, welches die Perspektive ändern kann, wird im Rahmen dieser Anmeldung entweder ein Objektiv verstanden, welches durch das Verfahren einzelner Linsen, Linsengruppe oder Blenden entlang der optischen Achse die Perspektive ändern kann oder ein Objektiv verstanden, welches aus separaten optischen Baugruppen besteht, wobei für unterschiedliche Perspektiven unterschiedliche Baugruppen genutzt werden. So kann z.B. ein Objektiv aus einem Trommelrevolver mit unterschiedlichen optischen Baugruppen bestehen, die je nach gewünschter Perspektive in den optischen Strahlengang eingeschwenkt werden. Ebenso ist es möglich, dass für den Perspektivwechsel eine Blende in den Strahlengang eines Objektivs eingebracht wird oder eine vorhandene Blende aus diesem entfernt wird.

In einer Ausführungsform erfolgt die Aufnahme eines der Bilder unter zentralperspektivischer Abbildung des Objektivs und die Aufnahme mindestens eines weiteren Bildes unter telezentrischer Abbildung des Objektivs. Die Vorteile eines Wechsel zwischen telezentrischer Abbildung und zentralperspektivischer Abbildung wurden bereits oben näher erläutert.

In einer anderen Ausführungsform umfasst die Vorrichtung eine Beleuchtung, wobei die Beleuchtung für die Aufnahme der mindestens zwei Bilder des Abschnitts des Innengewindes die Beleuchtungswinkel, mit denen das Beleuchtungslicht auf den zu betrachtenden Abschnitt des Innengewindes auftrifft, ändern kann. Die Vorteile eines unterschiedlichen Schatteneffekts auf die zusätzliche Ermittlung des Flankendurchmessers wurden oben ebenfalls bereits näher erläutert.

In einer weiteren Ausführungsform umfasst die Beleuchtung mindestens eine Lichtquelle in der Nähe des Objektivs, wobei die mindestens eine Lichtquelle die laterale Position und/oder die Orientierung relativ zum Objektiv zur Einstellung unterschiedlicher Beleuchtungswinkel des zu betrachtenden Abschnitts des Innengewindes ändern kann. Indem die Position und/oder die Neigung der Lichtquelle verändert wird, können unterschiedliche Beleuchtungswinkel und somit unterschiedliche Schatteneffekte erzeugt werden.

In einer Ausführungsform umfasst die Beleuchtung mehrere Lichtquellen in der Nähe des Objektivs, wobei zur Einstellung unterschiedlicher Beleuchtungswinkel des zu betrachtenden Abschnitts des Innengewindes jeweils unterschiedliche Lichtquellen dieser genannten Lichtquellen genutzt werden. Durch das An- bzw. Ausschalten von unterschiedlichen Lichtquellen, können ebenfalls unterschiedliche Beleuchtungswinkel und somit unterschiedliche Schatteneffekte erzeugt werden.

In einer anderen Ausführungsform umfasst die Beleuchtung mehrere Lichtquelle in der Nähe des Umlenkelements, wobei diese Lichtquellen so gestaltet sind, dass diese mit dem Umlenkelement in das zu vermessendes Innengewinde eingeführt werden können, und wobei zur Einstellung unterschiedlicher Beleuchtungswinkel des zu betrachtenden Abschnitts des Innengewindes jeweils unterschiedliche Lichtquellen dieser genannten Lichtquellen genutzt werden. Durch das An- bzw. Ausschalten von unterschiedlichen Lichtquellen die sich innerhalb des Innengewindes befinden, können zusätzlich oder alternativ andere Beleuchtungswinkel für die Beleuchtung des Innengewindes bereitgestellt werden als mit den Lichtquellen in der Nähe des Objektivs, die sich außerhalb des Innengewindes befinden.

Weitere Merkmale und Vorteile der Erfindung ergeben sich aus der nachfolgenden Beschreibung von Ausführungsbeispielen der Erfindung anhand der Figuren, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Ausführungsbeispiele der Erfindung werden nachfolgend anhand der Figuren näher erläutert. In diesen zeigt
- Figur 1: ein Koordinatenmessgerät in Portalbauweise;
- Figur 2: ein Dreh-Schwenkgelenk für ein Koordinantenmessgerät;
- Figur 3: eine erfindungsgemäße Vorrichtung zum Vermessen von Innengewinden;
- Figur 4: eine schematische Darstellung eines Bildes eines Innengewindes;
- Figur 5a: eine schematische Darstellung einer zentralperspektivischen Abbildung eines Abschnitts eines Innengewindes mit Hilfe eines Umlenkelements;
- Figur 5b: eine Abbildung gemäß Figur 4a bei einer dezentrierten Vorrichtung;
- Figur 5c: eine Abbildung gemäß Figur 4a bei einer geneigten Vorrichtung;
- Figur 6a: eine schematische Darstellung einer telezentrischen Abbildung eines Abschnitts eines Innengewindes mit Hilfe eines Umlenkelements;
- Figur 6b: eine Abbildung gemäß Figur 5a bei einer dezentrierten Vorrichtung;
- Figur 6c: eine Abbildung gemäß Figur 4a bei einer geneigten Vorrichtung;
- Figuren 7 und 8: eine schematische Darstellung von unterschiedlichen Schattenwürfen am Innengewinde bei Nutzung unterschiedlicher Lichtquellen und
- Figur 9: eine schematische Darstellung einer telezentrischen Abbildung des Innengewindes mit einem Schattenwurf entsprechend Figur 8.

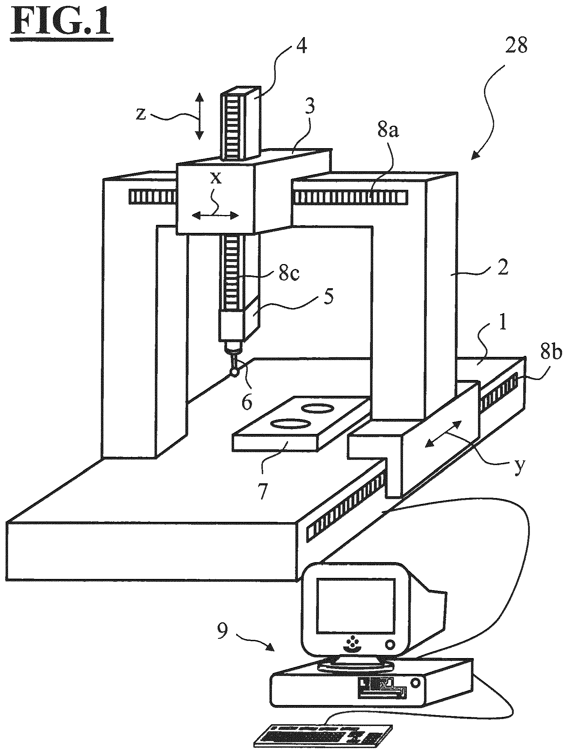

Figur 1 zeigt rein beispielhaft ein Koordinatenmessgerät 28 in sogenannter Portalbauweise. Ebenso gebräuchlich sind in der Koordinatenmesstechnik Koordinatenmessgeräte in Brücken- oder Ständerbauweise, sowie Mehrstellenmessgeräte, Lasertracker-, Lasertracer-, Roboter- oder Gelenkarm-Koordinatenmessgeräte. Es versteht sich, dass die vorliegende Erfindung bei allen diesen genannten Koordinatenmessgeräten eingesetzt werden kann und dass sich daher der Begriff Koordinatenmessgerät im Rahmen der vorliegenden Anmeldung auf alle diese genannten Koordinatenmessgeräte und deren Abwandlungen erstreckt.

Das Koordinatenmessgerät 28 weist einen Taststift 6 auf, der auswechselbar an einem Tastkopf 5 befestigt ist und der gegenüber dem Tastkopf 5 in den drei Koordinatenrichtungen x, y und z ausgelenkt werden kann. Die Auslenkung des Taststiftes 6 in den drei Koordinatenrichtungen x, y und z wird über drei im Tastkopf 5 befindliche Messgeber erfasst. Der Tastkopf 5 seinerseits kann in den drei Koordinatenrichtungen x, y und z bewegt werden. Dazu weist die Portalmechanik eine Messeinheit 2 auf, die in der mit dem Pfeil y bezeichneten Koordinatenrichtung gegenüber dem Messtisch 1 verfahren werden kann. Entlang der den Messtisch 1 überspannenden Traverse des Messeinheit 2 wiederum ist der sogenannte Messschlitten 3 in der mit dem Pfeil x bezeichneten Richtung beweglich geführt. Am Messschlitten 3 wiederum ist die Pinole 4 in der vertikalen mit dem Pfeil z bezeichneten Richtung beweglich geführt, so dass der Tastkopf 5 über die Portalmechanik in den drei Koordinatenrichtungen x, y und z verfahren werden kann. Die Vermessung eines Werkstückes erfolgt nunmehr derart, dass der Taststift 6 das zu vermessende Werkstück 7 an vorgesehenen Messpunkten antastet, wobei im Tastkopf 5 die Auslenkung des Taststiftes 6 gegenüber dem Tastkopf 5 in den drei Koordinatenrichtungen x, y und z gemessen wird. Zusätzlich werden an den drei Inkrementalmaßstäben 8a-8c, die von optischen Ableseköpfen abgetastet werden, die aktuelle Position des Tastkopfes 5 in den drei Koordinatenrichtungen x, y und z gemessen. Zur Ermittlung eines Messpunktes werden nunmehr die Maßstabsmesswerte 8a-8c mit den durch die Messgeber im Tastkopf 5 ermittelten Taststiftauslenkungen komponentenrichtig verrechnet und hieraus ein Messpunkt generiert.

Um nunmehr komplexe Werkstücke mit einer komplexen Geometrie vermessen zu können, werden üblicherweise unterschiedliche Taststifte benötigt, die in einem nicht dargestellten Magazin vorgehalten werden und automatisiert über eine Wechseleinrichtung am Tastkopf 5 eingewechselt werden können. Die unterschiedlichen Taststifte weisen üblicherweise einen oder mehrere Tasterschäfte auf, an deren Enden Antastkörper, wie beispielsweise eine Tastkugel oder ein Zylinder befestigt sein können. Eine horizontale Bohrung beispielsweise wird man mit einem horizontal ausgerichteten Tasterschaft, d.h. mit einem sogenannten seitlich angeordneten Taststift 6, vermessen können, während eine vertikale Bohrung mit einem vertikal ausgerichteten Tasterschaft vermessen werden kann.

Die Steuerung des Messablaufes und der Antriebsmittel des Koordinatenmessgerätes, sowie die Aufnahme und Auswertung der hierbei ermittelten Messwerte erfolgt durch eine Steuer und Auswerteeinheit 9, die hier in diesem Ausführungsbeispiel beispielhaft durch einen einzigen Rechner realisiert ist. Die Steuer- und Auswerteeinheit 9 kann zusätzlich mit einem nicht dargestellten Bedienpult verbunden werden, mit dem über Bedienhebel das Koordinatenmessgerät auch manuell in den Koordinatenrichtungen x, y und z verfahren werden kann, sowie auch andere Funktionen, wie beispielsweise ein Taststiftwechsel oder eine Bedienung des Messprogramms vorgenommen werden können.

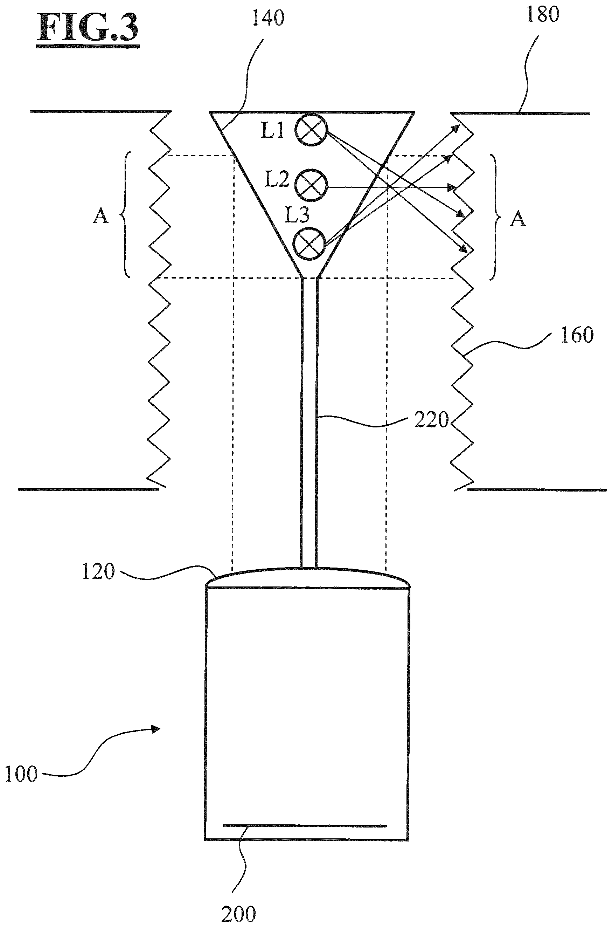

Alternativ zu einem Tastkopf 5 kann das Koordinatenmessgerät 28 der Figur 1 auch mit einem optischen Messsystem 100 bzw. einer Vorrichtung 100 gemäß der Figur 3 ausgerüstet sein. Diese Vorrichtung 100 der Figur 3 umfasst einen CCD- oder CMOS-Sensor 200, ein Objektiv 120, ein optisches Umlenkelement 140 und eine Beleuchtung mit den Lichtquellen L1 bis L3. Die Vorrichtung 100 kann mit Hilfe des Koordinatenmessgeräts 28 an die zu vermessende Stelle des Werkstücks 180 gezielt verfahren werden. Dort werden anschließend mit Hilfe des CCD- oder CMOS-Sensors 200, des Objektivs 120 und des Umlenkelements 140 Aufnahmen des Werkstücks 180 getätigt. Durch die Anwendung von Bildverarbeitungssoftware auf die Datensätze der aufgenommenen Bilder werden unter Berücksichtigung der Maßstabsmesswerte 8a-8c des Koordinatenmessgeräts die Koordinaten der betrachteten relevanten Strukturen entweder an der Steuer- und Auswerteeinheit 9 ausgegeben bzw. von der Steuer- und Auswerteeinheit für nachfolgende Auswerteschritte bereitgestellt.

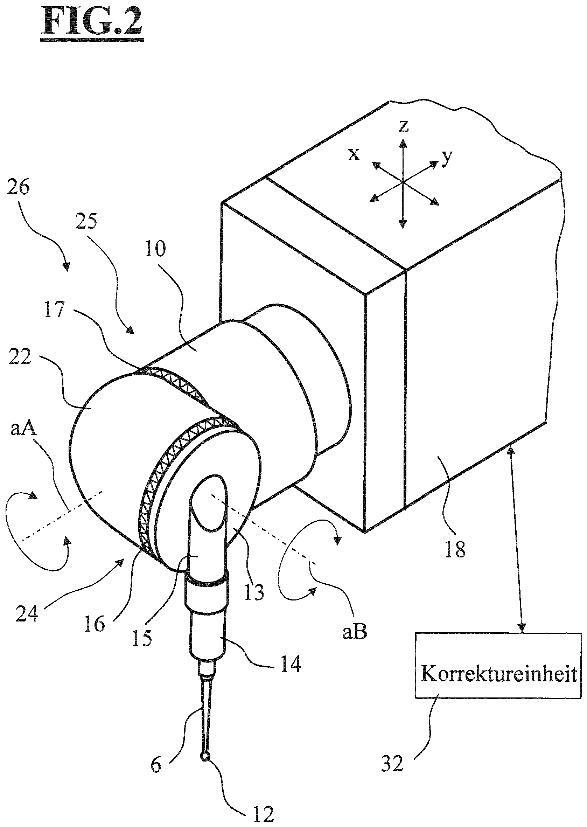

Die Figur 2 zeigt ein Dreh-Schwenkgelenk 26 an einem horizontal ausgerichteten Messarm 18 eines nicht weiter dargestellten Ständermessgeräts. Allerdings könnte das gezeigte Dreh-Schwenkgelenk 26 grundsätzlich auch bei einem Koordinatenmessgerät 28 der Figur 1 zur unterschiedlichen Orientierung eines Taststifts 6 im Raum eingesetzt werden. Ein Ständermessgerät besitzt im Gegensatz zu einem Portalmessgerät der Figur 1 einen Messarm 18, der die Funktion der Pinole 4 des Portalmessgeräts übernimmt. Dabei ist eine Pinole eine spezielle Ausführungsform eines Messarms für Koordinatenmessgeräte in Brücken- oder Portalbauweise in der Koordinatenrichtung z. Das in Figur 2 dargestellte Dreh-Schwenkgelenk 26 wird als ein sogenanntes rastendes Dreh-Schwenkgelenk bezeichnet und weist zwei Drehgelenke 24, 25 auf, die die Bauteile 10 und 22, sowie die Bauteile 22 und 13 drehbar miteinander verbinden, wobei die Drehgelenke 25, 24 die Drehachsen aA und aB definieren. Zum Festrasten der eingestellten Drehwinkel weist das Dreh-Schwenkgelenk 26 sogenannte Hirth-Verzahnungen 16 und 17 auf. Dies sind paarweise zusammenwirkende Zahnkränze, die ineinander greifen. Um die Drehwinkel der Drehgelenke 24, 25 zu verändern, befindet sich im Inneren des Dreh-Schwenkgelenks 26 ein gegen die Rückstellkräfte von Federn arbeitender pneumatischer Zylinder, über den das Bauteil 22 gegenüber dem Bauteil 10 sowie das Bauteil 13 gegenüber dem Bauteil 22 abgehoben werden kann. Außerdem ist für jedes der Drehgelenke ein Elektromotor vorgesehen, über den der Drehwinkel des jeweiligen Drehgelenkes 24, 25 verstellt werden kann. Nachdem der gewünschte Drehwinkel erreicht ist, werden die ausgehobenen Bauteile 10 und 22 bzw. 22 und 13 durch die Federn bei nachlassendem Druck der pneumatischen Zylinder wieder zusammengezogen. In der gezeigten Darstellung ist an die Aufnahme des Dreh-Schwenkgelenks 26 ein Tastkopf 14 vom schaltenden Typ angesetzt. Am Tastkopf 14 ist wiederum ein Taststift 6 mit einer Tastkugel 12 auswechselbar gehalten, wobei der Tastkopf 14, bei der Berührung eines Werkstückes mit der Tastkugel 12, ein elektrisches Signal auslöst. Der Tastkopf 14 ist mittels eines Adapterteils 15 an der Halteplatte 13 befestigt. Natürlich kann beispielsweise auch ein optisches Messsystem oder ein messender Tastkopf 5 anstatt dem schaltenden Tastkopf 14 entsprechend der Figur 1 verwendet werden. Darüber hinaus kann ein erfindungsgemäßes Messsystem 100 bzw. eine erfindungsgemäße Vorrichtung 100 entsprechend der Figur 3 anstatt dem schaltenden Tastkopf 14 verwendet werden. Dazu muss lediglich der Tastkopf 14 oder der Taststift 6 des Dreh-Schwenkgelenks 26 der Figur 2 durch eine entsprechende Vorrichtung 100 der Figur 3 ersetzt werden. Hierzu können entsprechende Wechselschnittstellen an den genannten Bauteilen vorgesehen sein. Durch die Verwendung eines Dreh-Schwenkgelenks 26 an einem Koordinatenmessgerät 28 kann das optische Messsystem 100 bzw. die Vorrichtung 100 gemäß der Figur 3 an diesem Koordinatenmessgerät 28 in verschiedene Richtungen orientiert werden, so dass hierdurch auch schräge Bohrungen mit einem Innengewinde 160 an einem Werkstück 180 der Vermessung zugänglich sind.

Die Figur 3 zeigt eine schematische Darstellung einer erfindungsgemäßen Vorrichtung 100 zum Vermessen eines Innengewindes 160 eines Werkstücks 180 mittels eines Koordinatenmessgeräts 28 mit Hilfe eines CCD- oder CMOS-Sensors 200 umfassend ein Objektiv 120 und ein optisches Umlenkelement 140, wobei das optische Umlenkelement 140 so gestaltet ist, dass es in das Innengewinde 160 eingeführt und an diesem entlanggeführt werden kann, wobei das Objektiv 120 im Zusammenspiel mit dem optischen Umlenkelement 140 für eine Abbildung eines Abschnitts A des Innengewindes 160 auf den CCD- oder CMOS-Sensor 200 sorgt, wobei das Objektiv 120 für die Aufnahme von mindestens zwei Bildern des Abschnitts A des Innengewindes 160 mittels des CCD- oder CMOS-Sensors 200 die Perspektive ändern kann.

Das Umlenkelement 140 ist in Fig. 3 zumindest teilweise verspiegelt, so dass der CCD- oder CMOS-Sensor 200 als Abbildung den Abschnitt A des Innengewindes 160 in einer Draufsicht erfasst. Vorzugsweise ist das Umlenkelement 140 als Kegel ausgebildet und durch das Verbindungselement 220 fest mit dem Objektiv verbunden. Dieses Verbindungselement 220 kann dabei eine Wechselschnittstelle zum Objektiv 120 aufweisen, so dass verschiedene Umlenkelemente 140 unterschiedlicher Bauart oder unterschiedlichen Durchmessers in Verbindung mit dem Objektiv 120 der Vorrichtung 100 zum Vermessen von Innengewinde mit unterschiedlichen Kerndurchmesser verwendet werden können. Das Umlenkelement 140 kann verschiedene Lichtquellen L1, L2 und L3 aufweisen, welche durch die teildurchlässige Beschichtung des Kegels hindurch das Innengewinde 160 beleuchten. Hierzu kann das Verbindungselement 220 elektrische Leitungen für die Energieversorgung der Lichtquellen L1, L2 und L3 des Umlenkelements 140 und entsprechende Schnittstellen aufweisen. Ferner kann die Oberflächenform des Umlenkelements 140 auch eine sogenannte Freiformfläche sein. Hierdurch ist es z.B. möglich, einen Teil der Abbildungsleistung vom Objektiv in das Umlenkelement zu verlagern, wodurch sich unter Umständen wesentlich kostengünstigere Objektive einsetzen lassen. Darüber hinaus kann der Einsatz von einfachen separaten optischen Baugruppen in einem Trommelrevolver durch eine Freiformfläche als Umlenkelement 140 begünstigt werden. Alternativ wäre auch der Einsatz von Computergenerierten Hologrammen (CGH) als Umlenkelement 140 denkbar.

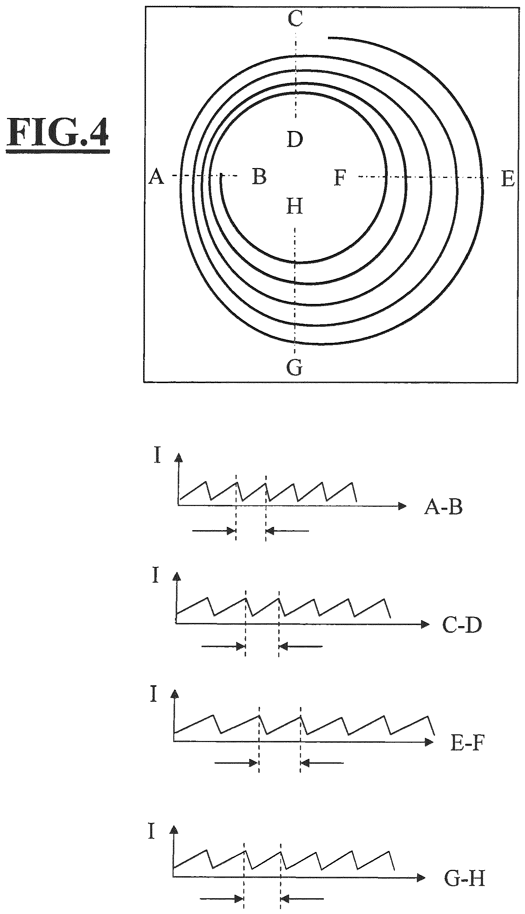

Die Figur 4 zeigt eine schematische Darstellung eines Bildes eines Innengewindes 160, wie es sich bei der Betrachtung des Innengewindes 160 per Auge oder per Kamera bietet, wenn in das Innengewinde 160 ohne ein Umlenkelement 140 hineingeschaut wird. Bei der Analyse eines solchen Bildes anhand der Schnitte AB, CD, EF und GH können nun die gewonnen Intensitätsverläufe entlang dieser Schnitte mittels Standardsoftware ausgewertet werden und der Abstand von zwei aufeinanderfolgenden Gewindekanten im jeweiligen Schnitt ermittelt werden. Allerdings sind die Ergebnisse dieser Analysen abhängig vom Standpunkt und der Orientierung des Betrachters bzw. der Kamera relativ zum Innengewinde 160. Bei der vorliegenden Figur 4 ist die Kamera relativ zum Innengewinde dezentriert und/oder gegenüber der Achse des Innengewindes 160 geneigt.

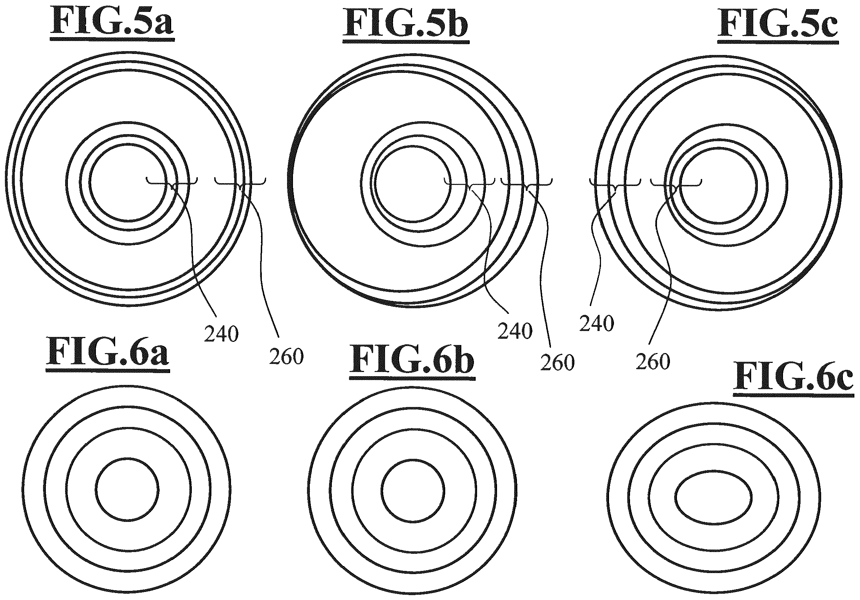

Um daher zu verlässlichen Gewindemaßen eines Innengewindes 160 zu gelangen, wird im Rahmen der vorliegenden Erfindung vorgeschlagen, dass Innengewinde 160 abschnittsweise in Draufsicht, d.h. in senkrechter Projektion zur Innengewindewand mittels mindestens zweier Bilder zu betrachten, bei denen die Abbildungsbedingungen unterschiedlich sind. Diese Vorgehensweise wird nachfolgend anhand der Figuren 5 a bis c und 6 a bis c näher erläutert. Dabei sind in diesen Figuren die Gewindekanten zum besseren Verständnis der unterschiedlichen Perspektiven bei der Abbildung als konzentrische Kreise dargestellt. Ein schneckenförmiger Gewindegang in den Darstellungen hätte die Effekte der unterschiedlichen Perspektiven auf die Lage der Gewindekanten in den Figuren überdeckt und das Verständnis der Effekte erschwert.

Die Figur 5a zeigt eine solche Draufsicht des Innengewindes 160 mittels einer zentralperspektivischen Abbildung auf den CCD- bzw. CMOS-Sensor 200 mit Hilfe des Objektivs 120 und des Umlenkelements 140. Bei der Figur 5a wird angenommen, dass sich das Umlenkelement 140 zentral innerhalb des Innengewindes 160 befindet ohne irgendeine Neigung oder Dezentrierung gegenüber dem Innengewinde 160. Die zentralperspektivische Abbildung lässt sich z.B. mit relativ einfachen Optiken 120 realisieren, die entsprechen stark abgeblendet werden, so dass sie nahezu analog einer Lochkamera funktionieren. Bei einer solchen zentralperspektivischen Abbildung erscheint der zentral betrachtete Gewindegang verbreitert gegenüber den Gewindegängen am Innen- 260 und Außenrand 240 der Figur 5a bzw. dem oberen und unteren Rand des betrachteten Abschnitts A der Figur3.

Die Figur 5b zeigt eine entsprechende Draufsicht des Innengewindes 160 mittels einer zentralperspektivischen Abbildung bei der allerdings das Objektiv 120 zusammen mit dem Umlenkelement 140 in der Figur 3 nach links in Richtung des Innengewindes dezentriert wurde gegenüber der Position des Objektivs 120 und des Umlenkelements 140 bei der Aufnahme der Figur 5a. Durch die Dezentrierung erscheint der zentral betrachtete Gewindegang links verbreitert und rechts verkleinert gegenüber der Figur 5a. Entsprechend rücken die Gewindegänge am Innen- 260 und Außenrand 240 links zusammen und rechts auseinander.

Die Figur 5c zeigt eine entsprechende Draufsicht des Innengewindes 160 mittels einer zentralperspektivischen Abbildung bei der allerdings das Objektiv 120 nach rechts und das Umlenkelement 140 in der Figur 3 nach links in Richtung des Innengewindes 160 gegenüber der Position des Objektivs 120 und des Umlenkelements 140 bei der Aufnahme der Figur 5a verschoben wurde, so dass eine andere Orientierung der Vorrichtung 100 zum Innengewinde 160 als bei der Figur 5a resultiert. Durch diese andere Orientierung erscheint der zentrale betrachtete Gewindegang gegenüber der Figur 5a nach rechts verschoben, wobei sich die Breite des zentralen Gewindegangs rechts und links nicht so stark ändert, wie bei einer Dezentrierung gemäß Figur 5b. Die Gewindegänge am Innen- 260 und Außenrand 240 rücken in Figur 5c links in Richtung Innenrand und rechts in Richtung Außenrand im Vergleich zu Figur 5a.

Die Figur 6a zeigt eine Draufsicht des Innengewindes 160 mittels einer telezentrischen Abbildung auf den CCD- bzw. CMOS-Sensor 200 mit Hilfe des Objektivs 120 und des Umlenkelements 140. Bei der Figur 6a wird entsprechend Figur 5a angenommen, dass sich das Umlenkelement zentral innerhalb des Innengewindes 160 befindet ohne irgendeine Neigung oder Dezentrierung gegenüber dem Innengewinde 160. Somit befindet sich die Vorrichtung 100 der Figur 3 bei der Aufnahme der Figur 5a und der Figur 6a an der gleichen Position innerhalb des Innengewindes 160. Lediglich die Perspektive wird bei der Aufnahme der Figur 6a auf telezentrisch gewechselt. Dieser Wechsel der Perspektive kann z.B. dadurch erfolgen, dass ein Objektiv 120 verwendet wird, welches einen solchen Wechsel durch das Verfahren von einzelnen Linsen, Linsengruppen oder Blenden erlaubt oder dadurch erfolgen, dass eine telezentrische Baugruppe als Bestandteil eines Objektivs 120 für die Aufnahme der Figur 6a verwendet wird anstatt der einfachen optischen Baugruppe für die Aufnahme der Figur 5a. Bei einer telezentrischen Perspektive erscheinen alle Gewindekanten der Figur 3 bei einer Aufnahme als äquidistante Kreise unabhängig vom tatsächlichen Abstand der Gewindekanten zum Objektiv 120. Zur Auswertung der Steigung des Innengewindes 160 können daher die Mittelwerte der Abstände der Gewindekanten in der Figur 6a anhand von mehreren Schnitten entsprechend Figur 4 ermittelt werden und ergeben somit unter Berücksichtigung des Abbildungsmaßstabs des Objektivs 120 die gemittelte Steigung des Innengewindes 160.

Die Figur 6b zeigt eine entsprechende Draufsicht des Innengewindes 160 mittels einer telezentrischen Abbildung bei der allerdings das Objektiv 120 zusammen mit dem Umlenkelement 140 in der Figur 3 nach links in Richtung des Innengewindes dezentriert wurde gegenüber der Position des Objektivs 120 und des Umlenkelements 140 bei der Aufnahme der Figur 6a. Somit befindet sich die Vorrichtung 100 der Figur 3 bei der Aufnahme der Figur 6b an der gleichen Position wie bei der Aufnahme der Figur 5b. Da bei einer telezentrischen Perspektive die Gewindegänge 160 in äquidistanten Kreisen unabhängig von ihrem Abstand gegenüber dem Objektiv 120 abgebildet werden, ändert sich bei einer Dezentrierung der Vorrichtung 100 im Innengewinde 160 nicht die Abbildung der Gewindegänge auf dem CCD- bzw. CMOS-Sensor 200. Somit gleicht die Figur 6b mit dezentrierter Vorrichtung 100 der Figur 6a mit zentrierter Vorrichtung 100.

Die Figur 6c zeigt eine entsprechende Draufsicht des Innengewindes 160 mittels einer zentralperspektivischen Abbildung bei der allerdings das Objektiv 120 nach rechts und das Umlenkelement 140 in der Figur 3 nach links in Richtung des Innengewindes 160 gegenüber der Position des Objektivs 120 und des Umlenkelements 140 bei der Aufnahme der Figur 6a verschoben wurde, so dass eine andere Orientierung der Vorrichtung 100 zum Innengewinde 160 als bei der Figur 6a resultiert. Die Orientierung der Vorrichtung 100 bei der Figur 6c entspricht der Orientierung der Vorrichtung 100 bei der Figur 5c. Durch diese andere Orientierung erscheinen die Gewindegänge in der Figur 6c als äquidistante Ellipsen, wobei die großen Halbachsen der Ellipsen die Richtung der Neigung anzeigen und wobei aus dem Verhältnis der beiden Halbachsen der Ellipsen sich die Orientierung bzw. der Neigungswinkel der Vorrichtung 100 zum Innengewinde 160 ermitteln lässt. Somit ist es möglich, anhand der bei telezentrischer Abbildung aufgenommenen Daten die Orientierung der Vorrichtung 100 unabhängig von der Position der Vorrichtung 100 zum Innengewinde 160 zu ermitteln. Da anhand der Daten der telezentrischen Abbildung sowohl die Steigung des Innengewindes 160 als auch die Orientierung der Vorrichtung 100 zum Innengewinde 160 ermittelt werden kann, können diese Informationen bei der Analyse der Daten der zentral-perspektivischen Abbildung genutzt werden, die Position der Vorrichtung 100 zum Innengewinde 160 und den Kerndurchmesser des Innengewindes 160 zu ermitteln.

Bei einer Vermessung eines Innengewindes 160 eines Werkstücks 180 wird die Vorrichtung 100 durch ein Koordinatenmessgerät 28 in ein Innengewinde 160 eingeführt. Dabei wird im allgemeinen die Abbildung der Gewindekanten bei einer zentral-perspektivischen Aufnahme sowohl geprägt sein durch eine Dezentrierung der Vorrichtung 100 wie sie sich in Abbildung 5b darstellt als auch geprägt sein durch eine Orientierung der Vorrichtung 100 wie sie sich in Abbildung 5c darstellt. Wenn nun bei der gleichen Position und Orientierung der Vorrichtung 100 anhand der Daten einer telezentrischen Aufnahme die Gewindesteigung und die Orientierung der Vorrichtung 100 gegenüber dem Innengewinde 160 ermittelt werden, können diese Informationen genutzt werden, die Effekte aufgrund der Orientierung der Vorrichtung 100 aus den Daten der zentral-perspektivischen Aufnahme heraus zu rechnen, um aus den resultierenden Daten anschließend die Position der Vorrichtung 100 und den Kerndurchmesser des Innengewindes 160 zu ermitteln.

Es versteht sich, dass die Erfindung darauf beruht, anhand mindestens zweier Bilder mit unterschiedlichen Aufnahmebedingungen aus den zweidimensionalen Datensätzen Mittelwerte für eine oder mehrere der vier Messgrößen Position, Orientierung , Steigung und Kerndurchmesser des Innengewindes 160 zu gewinnen. Es müssen hierzu nicht unbedingt die oben zu den Figuren 5a bis c und 6a bis c genannten telezentrischen und zentral- perspektivischen Aufnahmebedingungen eingehalten werden. Es genügt lediglich, dass sich die Aufnahmebedingungen der beiden Bilder unterscheiden. Die Verwendung von telezentrischer Abbildung und zentral-perspektivischer Abbildung hat zwar gewisse Vorteile, da diese Abbildungen im "Raum" der Abbildungen quasi "orthogonal" zueinander sind und sich somit die Effekte von Orientierung und Position der Vorrichtung 100 trennen lassen, es können jedoch prinzipiell jede beliebige zwei Aufnahmebedingungen zwischen zentral- perspektivischer Abbildung und telezentrischer Abbildung eingesetzt werden, solange sie sich unterscheiden. Bei nur geringen Unterschieden in den Abbildungen wird es allerdings schwierig, die oben genannten Messgrößen mit einer hinreichenden Genauigkeit zu ermitteln, da Aufnahmefehler eine immer größere Rolle spielen, je weniger sich die Aufnahmebedingungen unterscheiden. Allerdings lässt sich die Genauigkeit wiederum dadurch steigern, dass mehrere Aufnahmen, insbesondere mehr als 3, mit unterschiedlichen Aufnahmebedingungen aufgenommen werden. Es versteht sich, dass die Aufnahmebedingungen auch durch eine andere Position und/oder Orientierung der Vorrichtung 100 zum Innengewinde 160 realisiert werden können. Darüber hinaus versteht es sich, dass nicht unbedingt alle auswertbaren Messgrößen immer gleichzeitig aus den beiden Bilder ermittelt werden müssen. Zum Beispiel kann es sein, dass die Steigung des Innengewindes 160 als hinreichend genau bekannt vorausgesetzt wird und der Nutzer des Koordinatenmessgeräts 28 mit der Vorrichtung 100 lediglich an der Position, der Orientierung und dem Kerndurchmesser des Innengewindes 160 gegenüber dem Werkstück 180 interessiert ist.

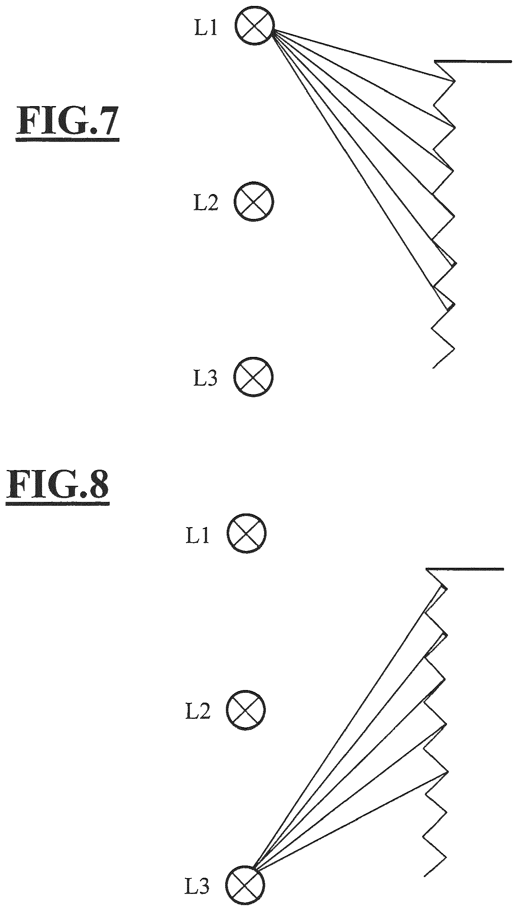

Die Figuren 7 und 8 zeigen eine vergrößerte Darstellung der Figur 3 im Bereich des Umlenkelements 140 und des Abschnitts A des Innengewindes 160. Dabei zeigt Figur 7 den Schattenwurf bei Einsatz der Lichtquelle L1 des Umlenkelements 140 und Figur 8 den entsprechenden Schattenwurf bei Einsatz der Lichtquelle L3 des Umlenkelements 140. In Figur 7 ist deutlich zu erkennen, dass die unmittelbar der Lichtquelle L1 gegenüberliegenden Gewindegänge voll ausgeleuchtet werden, während es hingegen bei den entfernten Gewindegängen zu Schattenbildung kommt. Bei einer Aufnahme der Gewindegänge kommt es folglich beim Einsatz der Lichtquelle L1 dazu, dass sowohl die Gewindekannten als auch die Enden des Innengewindes an der Gewindewand am Werkstück 180 durch die volle Ausleuchtung der gegenüberliegenden Gewindegänge in den Bildern schwer zu ermitteln sind, da sie sich in ihrer Helligkeit kaum gegenüber den Gewindeflanken abheben. Sobald allerdings die Schattenbildung einsetzt, kann die Gewindekante als Hell/Dunkelgrenze eindeutig identifiziert werden.

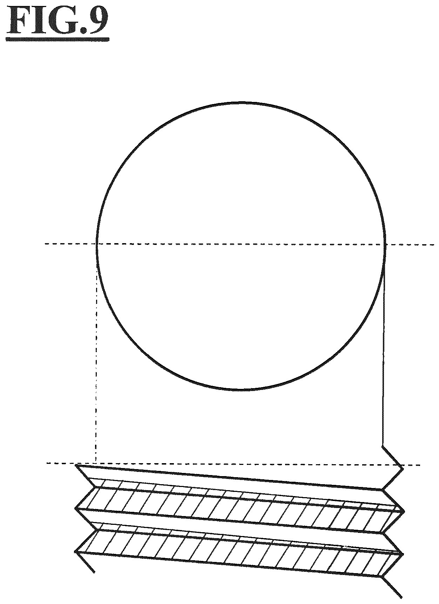

Die Figur 9 zeigt hierzu in Draufsicht den Gewindegang eines Innengewindes 160 bei einer telezentrischen Abbildung mit Hilfe des Objektivs 120 und dem Umlenkelement 140, wobei der Gewindegang durch die Lichtquelle L3 entsprechend Figur 8 beleuchtet wird. Es ist deutlich in Figur 9 zu erkennen, dass für die beiden Gewindegänge der Figur 8, bei denen die Schattenbildung einsetzt, die Gewindekanten in der Figur 9 jeweils als Hell/Dunkelgrenze hervortreten. Durch den Einsatz mehrere unterschiedlicher Lichtquellen L1 bis L3 können somit in unterschiedlichen Bereichen des Abschnitts A unterschiedliche Schatteneffekte erzeugt werden. Die entsprechenden Aufnahmen hiervon können dann zu einem Datensatz kombiniert werden, indem alle Gewindekanten des Abschnitts A als deutliche Hell/Dunkelgrenzen analysiert werden können. Analog lassen sich die Aufnahmen zu einem Datensatz kombinieren, bei denen die Enden des Innengewindes 160 an der Gewindewand am Werkstück 180 deutlich hervortreten, so dass der Flankendurchmesser gemäß DIN 13 des Innengewindes 160 ermittelt werden kann.

Es versteht sich, dass die unterschiedlichen Lichtquellen L1 bis L3 nicht nur in der Nähe des Umlenkelement 140 positioniert werden können. Es ist auch denkbar eine oder mehrere Lichtquellen in der Nähe des Objektivs 120 zu positionieren und das Umlenkelement 140 zusätzlich als Beleuchtungsspiegel zur Ausleuchtung des Innengewindes 160 mittels dieser Lichtquellen zu nutzen.

Beim Einsatz von mehreren Lichtquellen in der Nähe des Umlenkelements 140 oder in der Nähe des Objektivs 120 können unterschiedliche Beleuchtungswinkel durch die Nutzung jeweils unterschiedlicher Lichtquellen zur Beleuchtung des Innengewindes realisiert werden.

Es versteht sich, dass das erfindungsgemäße Verfahren bzw. die erfindungsgemäße Vorrichtung 100 anhand von Gewindenormalen geeicht werden kann. Dazu werden Werkstücke mit mehreren genau bekannten Innengewinden auf dem Messtisch eines Koordinatenmessgeräts 28 platziert und es wird das erfindungsgemäße Verfahren mittels der erfindungsgemäßen Vorrichtung durchgeführt und die erfassten Maße des Innengewindes werden anhand der bekannten Maße der Innengewinde kalibriert. Hierzu werden sich die eingesetzten Gewindenormale in ihrem Kerndurchmesser und ihrer Steigung sowie ihrer Position und Neigung gegenüber dem Werkstückkoordinatensystem unterscheiden.

## Patentansprüche

1. Verfahren zum Vermessen eines Innengewindes (160) eines Werkstücks (180) mittels eines Koordinatenmessgeräts (28) mit Hilfe eines CCD- oder CMOS-Sensors (200), **dadurch gekennzeichnet, dass** von einem Abschnitt (A) des Innengewindes (160) mindestens zwei Bilder mit dem CCD- oder CMOS-Sensor (200) aufgenommen werden, wobei zur Aufnahme des Abschnitts (A) des Innengewindes (160) dieser mittels einer Beleuchtung beleuchtet wird und wobei die Aufnahmebedingungen für die mindestens zwei Bilder verändert werden und wobei die Daten dieser mindestens zwei aufgenommenen Bilder zumindest teilweise dazu verwendet werden, die Position, die Orientierung, den Kerndurchmesser und/oder die Steigung des Innengewindes (160) zu ermitteln.

2. Verfahren nach Anspruch 1, wobei aus den Daten der mindestens zwei aufgenommenen Bilder die Position und die Orientierung und der Kerndurchmesser und die Steigung des Innengewindes (160) ermittelt werden.

3. Verfahren nach Anspruch 1 oder 2, wobei die Aufnahme eines der Bilder unter zentralperspektivischer Abbildung erfolgt und die Aufnahme mindestens eines weiteren Bildes unter telezentrischer Abbildung erfolgt.

4. Verfahren nach einem der vorhergehenden Ansprüche, wobei die laterale Position und/oder die Orientierung der für die Abbildung auf den CCD- oder CMOS-Sensor verantwortlichen optischen Baugruppen (120, 140) zum Innengewinde für die Aufnahme eines der Bilder gegenüber der lateralen Position und/oder Orientierung des Sensors (100) zum Innengewinde (160) für die Aufnahme mindestens eines weiteren Bildes verändert wird.

5. Verfahren nach einem der vorhergehenden Ansprüche, wobei die Aufnahme eines der Bilder unter einem ersten Beleuchtungswinkel erfolgt, der von einem weiteren Beleuchtungswinkel bei der Aufnahme eines weiteren Bildes abweicht.

6. Verfahren nach Anspruch 5, wobei aus den Daten der mindestens zwei aufgenommenen Bilder der Flankendurchmesser des Innengewindes (160) ermittelt wird.

7. Vorrichtung (100) zum Vermessen eines Innengewindes (160) eines Werkstücks (180) mittels eines Koordinatenmessgeräts (28) mit Hilfe eines CCD- oder CMOS-Sensors (200) gemäß einem Verfahren der vorgenannten Ansprüche umfassend ein Objektiv (120), eine Beleuchtung und ein optisches Umlenkelement (140), wobei das optische Umlenkelement (140) so gestaltet ist, dass es in das Innengewinde (160) eingeführt und an diesem entlanggeführt werden kann, wobei das Objektiv (120) im Zusammenspiel mit dem optischen Umlenkelement (140) für eine Abbildung eines Abschnitts (A) des Innengewindes (160) auf den CCD- oder CMOS-Sensor (200) sorgt, **dadurch gekennzeichnet, dass** das Objektiv (120) für die Aufnahme von mindestens zwei Bildern des Abschnitts (A) des Innengewindes (160) mittels des CCD- oder CMOS-Sensors (200) die Perspektive ändern kann.

8. Vorrichtung (100) nach Anspruch 7, wobei die Aufnahme eines der Bilder unter zentralperspektivischer Abbildung des Objektivs (120) erfolgt und die Aufnahme mindestens eines weiteren Bildes unter telezentrischer Abbildung des Objektivs (120) erfolgt.

9. Vorrichtung (100) nach Anspruch 7 oder 8, wobei die Beleuchtung für die Aufnahme der mindestens zwei Bilder des Abschnitts (A) des Innengewindes (160) die Beleuchtungswinkel, mit denen das Beleuchtungslicht auf den zu betrachtenden Abschnitt (A) des Innengewindes (160) auftrifft, ändern kann.

10. Vorrichtung (100) nach Anspruch 9, wobei die Beleuchtung mindestens eine Lichtquelle in der Nähe des Objektivs (120) umfasst und wobei die mindestens eine Lichtquelle die laterale Position und/oder die Orientierung zum Objektiv (120) zur Einstellung unterschiedlicher Beleuchtungswinkel des zu betrachtenden Abschnitts (A) des Innengewindes (160) ändern kann.

11. Vorrichtung (100) nach Anspruch 9 oder 10, wobei die Beleuchtung mehrere Lichtquellen in der Nähe des Objektivs (120) umfasst und wobei zur Einstellung unterschiedlicher Beleuchtungswinkel des zu betrachtenden Abschnitts (A) des Innengewindes (160) unterschiedliche Lichtquellen dieser genannten Lichtquellen genutzt werden.

12. Vorrichtung (100) nach einem der Ansprüche 9 bis 11, wobei die Beleuchtung mehrere Lichtquelle (L1; L2; L3) in der Nähe des Umlenkelements (140) umfasst, wobei diese Lichtquellen (L1; L2; L3) so gestaltet sind, dass diese mit dem Umlenkelement (140) in das zu vermessende Innengewinde (160) eingeführt werden können, und wobei zur Einstellung unterschiedlicher Beleuchtungswinkel des zu betrachtenden Abschnitts (A) des Innengewindes (160) unterschiedliche Lichtquellen dieser genannten Lichtquellen (L1; L2; L3) genutzt werden.

## Claims

1. Method for measuring a female thread (160) of a workpiece (180) by means of a coordinate measuring machine (28) with the aid of a CCD or CMOS sensor (200), **characterized in that** the CCD or CMOS sensor (200) is used to record at least two images of a portion (A) of the female thread (160), wherein, for the purposes of recording the portion (A) of the female thread (160), the latter is illuminated by means of an illumination and wherein the recording conditions for the at least two images are modified and wherein the data from these at least two recorded images are used at least in part to establish the position, the orientation, the core diameter and/or the pitch of the female thread (160).

2. Method according to Claim 1, wherein the position and the orientation and the core diameter and the pitch of the female thread (160) are established from the data of the at least two recorded images.

3. Method according to Claim 1 or 2, wherein one of the images is recorded under central-perspective imaging and the at least one further image is imaged under telecentric imaging.

4. Method according to one of the preceding claims, wherein the lateral position and/or the orientation of the optical components (120, 140), which are responsible for the imaging on the CCD or CMOS sensor, with respect to the female thread is/are modified for recording one of the images in relation to the lateral position and/or orientation of the sensor (100) with respect to the female thread (160) for recording at least one further image.

5. Method according to one of the preceding claims, wherein one of the images is recorded under a first illumination angle which deviates from a further illumination angle when recording a further image.

6. Method according to Claim 5, wherein the pitch diameter of the female thread (160) is established from the data of the at least two recorded images.

7. Device (100) for measuring a female thread (160) of a workpiece (180) by means of a coordinate measuring machine (28) with the aid of a CCD or CMOS sensor (200) in accordance with a method according to the preceding claims, comprising an objective (120), an illumination and an optical deflection element (140), wherein the optical deflection element (140) is configured in such a way that it can be inserted into the female thread (160) and guided therealong, wherein the objective (120), together with the optical deflection element (140), ensures an imaging of a portion (A) of the female thread (160) on the CCD or CMOS sensor (200), **characterized in that** the objective (120) can change the perspective for recording at least two images of the portion (A) of the female thread (160) by means of the CCD or CMOS sensor (200).

8. Device (100) according to Claim 7, wherein one of the images is recorded under central-perspective imaging of the objective (120) and the at least one further image is imaged under telecentric imaging of the objective (120).

9. Device (100) according to Claim 7 or 8, wherein, for the purposes of recording the at least two images of the portion (A) of the female thread (160), the illumination can change the illumination angle with which the illumination light is incident on the portion (A) of the female thread (160) to be observed.

10. Device (100) according to Claim 9, wherein the illumination comprises at least one light source in the vicinity of the objective (120) and wherein the at least one light source can change the lateral position and/or the orientation with respect to the objective (120) for setting different illumination angles of the portion (A) of the female thread (160) to be observed.

11. Device (100) according to Claim 9 or 10, wherein the illumination comprises a plurality of light sources in the vicinity of the objective (120) and wherein different light sources of these aforementioned light sources are used for setting different illumination angles of the portion (A) of the female thread (160) to be observed.

12. Device (100) according to one of Claims 9 to 11, wherein the illumination comprises a plurality of light sources (L1; L2; L3) in the vicinity of the deflection element (140), wherein these light sources (L1; L2; L3) are configured in such a way that they can be inserted together with the deflection element (140) into the female thread (160) to be measured and wherein different light sources of these aforementioned light sources (L1; L2; L3) are used for setting different illumination angles of the portion (A) of the female thread (160) to be observed.

## Revendications

1. Procédé destiné à mesurer un filetage intérieur (160) d'une pièce à usiner (180) au moyen d'un appareil de mesure de coordonnées (28) à l'aide d'un capteur CCD ou CMOS (200), **caractérisé en ce qu'**au moins deux images d'une section (A) du filetage intérieur (160) sont acquises par le capteur CCD ou CMOS (200), dans lequel, pour l'acquisition de la section (A) du filetage intérieur (160), celui-ci est éclairé au moyen d'un éclairage et dans lequel les conditions d'acquisition des au moins deux images sont modifiées et dans lequel les données desdites au moins deux images acquises sont utilisées au moins partiellement pour déterminer la position, l'orientation, le diamètre d'âme et/ou la pente du filetage intérieur (160).

2. Procédé selon la revendication 1, dans lequel la position et l'orientation et le diamètre d'âme et la pente du filetage intérieur (160) sont déterminés à partir des données des au moins deux images acquises.

3. Procédé selon la revendication 1 ou 2, dans lequel l'acquisition de l'une des images s'effectue par formation d'image en perspective centrale et l'acquisition d'au moins une autre image s'effectue par formation d'image télécentrique.

4. Procédé selon l'une quelconque des revendications précédentes, dans lequel la position latérale et/ou l'orientation des modules optiques (120, 140) responsables de la formation d'image sur le capteur CCD ou CMOS par rapport au filetage intérieur pour l'acquisition de l'une des images est modifiée par rapport à la position latérale et/ou à l'orientation du capteur (100) par rapport au filetage intérieur (160) pour l'acquisition d'au moins une autre image.

5. Procédé selon l'une quelconque des revendications précédentes, dans lequel l'acquisition de l'une des images s'effectue en-dessous d'un premier angle d'éclairement qui s'écarte d'un autre angle d'éclairement lors de l'acquisition d'une autre image.

6. Procédé selon la revendication 5, dans lequel le diamètre de flanc du filetage intérieur (160) est déterminé à partir des données des au moins deux images acquises.

7. Dispositif (100) destiné à mesurer un filetage intérieur (160) d'une pièce à usiner (180) au moyen d'un appareil de mesure de coordonnées (28) à l'aide d'un capteur CCD ou CMOS (200) conformément à un procédé selon l'une quelconque des revendications précédentes, comprenant un objectif (120), un éclairage et un élément de déviation optique (140), dans lequel l'élément de déviation optique (140) est conçu de manière à ce qu'il puisse être introduit dans le filetage intérieur (160) et être guidé le long de celui-ci, dans lequel l'objectif (120) provoque, en coopération avec l'élément de déviation optique (140), la formation de l'image d'une section (A) du filetage intérieur (160) sur le capteur CCD ou CMOS (200), **caractérisé en ce que** l'objectif (120) peut modifier la perspective pour l'acquisition d'au moins deux images de la section (A) du filetage intérieur (160) au moyen du capteur CCD ou CMOS (200).

8. Dispositif (100) selon la revendication 7, dans lequel l'acquisition de l'une des images s'effectue par formation d'image en perspective centrale par l'objectif (120) et l'acquisition d'au moins une autre image s'effectue par formation d'image télécentrique par l'objectif (120).

9. Dispositif (100) selon la revendication 7 ou 8, dans lequel l'éclairage peut modifier l'angle d'éclairement sous lequel la lumière d'éclairage est incidente sur la section (A) devant être observée du filetage intérieur (160) pour l'acquisition des au moins deux images de la section (A) du filetage intérieur (160).

10. Dispositif (100) selon la revendication 9, dans lequel l'éclairage comprend au moins une source lumineuse située à proximité de l'objectif (120) et dans lequel l'au moins une source lumineuse peut modifier la position latérale et/ou l'orientation par rapport à l'objectif (120) pour le réglage d'angles d'éclairement différents de la section (A) devant être observée du filetage intérieur (160).

11. Dispositif (100) selon la revendication 9 ou 10, dans lequel l'éclairage comprend plusieurs sources lumineuses situées à proximité de l'objectif (120) et dans lequel des sources lumineuses différentes desdites sources lumineuses sont utilisées pour le réglage d'angles d'éclairement différents de la section (A) devant être observée du filetage intérieur (160).

12. Dispositif (100) selon l'une quelconque des revendications 9 à 11, dans lequel l'éclairage comprend plusieurs sources lumineuses (L1 ; L2 ; L3) situées à proximité de l'élément de déviation (140), dans lequel lesdites sources lumineuses (LI ; L2 ; L3) sont conçues de manière à ce qu'elles puissent être introduites au moyen de l'élément de déviation (140) dans le filetage intérieur (160) à mesurer, et dans lequel des sources lumineuses différentes desdites sources lumineuses (L1 ; L2 ; L3) sont utilisées pour le réglage d'angles d'éclairement différents de la section (A) devant être observée du filetage intérieur (160).
